# EUROPEAN PATENT SPECIFICATION

(11) **EP 1 471 290 B1**
(45) Date of publication and mention of the grant of the patent: **09.03.2011**
(21) Application number: 04008860.1
(22) Date of filing: 14.04.2004
(51) Int. Cl.: F16H 61/12, G01D 3/08

(54) **Failure detection device for a rotation angle detection sensor**
Fehlererkennungsvorrichtung für Drehwinkelsensor
Dispositif de détection de défaillance pour un capteur d'angle de rotation

(30) Priority: 23.04.2003 JP 2003118086
(43) Date of publication of application: 27.10.2004
(73) Proprietor: AISIN AW CO., LTD., Anjo-shi, Aichi-ken 444-1192 (JP)
(72) Inventor: Kuwata, Masayuki c/o Aisin AW Co., Ltd., Anjo-shi Aichi-ken, 444-1192 (JP); Niinomi, Toru c/o Aisin AW Co., Ltd., Anjo-shi Aichi-ken, 444-1192 (JP); Komatsu, Katsutoshi c/o Aisin AW Co., Ltd., Anjo-shi Aichi-ken, 444-1192 (JP); Saitou, Masao c/o Aisin AW Co., Ltd., Anjo-shi Aichi-ken, 444-1192 (JP); Suzuki, Kenji c/o Aisin AW Co., Ltd., Anjo-shi Aichi-ken, 444-1192 (JP); Nomura, Tomokazu c/o Aisin AW Co., Ltd., Anjo-shi Aichi-ken, 444-1192 (JP)
(74) Representative: Vossius & Partner

(56) References cited:
- EP-A- 1 006 341
- EP-A- 1 120 626
- EP-A- 1 193 472
- WO-A-03/098155
- DE-A1- 19 712 869
- DE-A1- 19 757 196
- US-A- 5 608 317

## Description

This invention relates to a failure detection device for detecting a failure of a rotation angle detection sensor, which detects a rotation angle of a rotation member.

DE 197 57 196 A1 relates to a sensor device with measurement error recognition. The device has two sensors and an evaluation unit for providing a measuring signal from the two sensor signals received via A/D converters. Switches are inserted between the sensors and the A/D converters, to switch the inputs of the A/D converters between the different sensor outputs. The evaluation unit indicates a measuring error when the measuring signals differ from one another.

US 5,608,317 A relates to a complementary linear magnetic position sensor. Linear Hall effect magnetic sensor elements are used in a complementary fashion in a position sensor. The oppositely signed signal voltages of the sensor elements are amplified and fed into a microprocessor circuit. Deviations from the linearity can be compensated by lookup tables. Temperature changes can be measured and included into the compensation process.

EP 1 006 341 A1 discloses the features of the preamble of claim 1 and relates to a rotary position sensor having redundant sensing including a base upon which a plurality of radially extending magnetic sensing elements are mounted to form two sets of sensors. Interleaved with the sensing elements is a plurality of uniformly spaced magnetic concentrators. The sensor assembly is placed in a uniform magnetic field created, for example, by a flat plate magnet mounted adjacent the sensor assembly, and rotatable relative to it. The relative rotary position of the sensor assembly to the magnetic field is determined by comparing the relative values of the sensor elements in the array to each other. Also, failure of the sensor assembly is determined by comparing the rotary position calculated for the first set to the rotary position calculated for the second set.

DE 197 12 869 A1 relates to a steering angle sensor system with enhanced redundancy in order to increase faultlessness in measured results. In order to meet the safety requirements of steer by wire or other vehicle adjustment systems with regard to steering angle measurement data, several sensors are operated in parallel and measurement data provided by a second fault-free sensor is evaluated if a first sensor is found to be faulty.

Conventionally, in a vehicle where shift control is performed by A/T (Automatic Transmission) or CVT (Continuously Variable Transmission), when a range is set by a shift lever, an electronic control unit (ECU), controlling the transmission, controls, for example, solenoids in the transmission with shifting logic in the set range, and the shift control is performed. In such a control, when the ECU determines the set range, a rotation angle of a shift lever is detected by a position sensor, and on the basis of output signal of the position sensor, the ECU determines and confirms the set range.

As a conventional position sensor, a non-contact type position sensor is proposed. In the non-contact type position sensor, a rotation angle of a movable-side terminal, attached to a manual shaft rotated by a shift lever, so that the movable side terminal is rotated together with the manual shaft, is detected with non-contact and a voltage corresponding to the rotation angle is output.

The ECU compares the output value from the non-contact type position sensor with a predetermined value (i.e. a threshold value) for each range, which is set in advance and consists of a voltage value corresponding to output value of the position sensor. Then, the ECU recognizes a pattern of the range and thus determines a position of the set range. Such a non-contact type position sensor can generate stable output over the long term because there is little abrasion. (see e.g. USP5,846,160.)

On the other hand, a non-contact type position sensor is used in other field of a transmission, for example, components of automobile. One example is a non-contact type throttle-opening sensor for detecting throttle opening (i.e. a rotation angle of a rotation axis of a throttle valve for an internal combustion engine). The non-contact type throttle-opening sensor includes two hole ICs, as detection elements. Each of these two hole ICs has input-output characteristics where an absolute value of an inclination is different. If relative relationship of each output voltage of the two hole ICs is out of a predetermined error range in a map, it is determined that either of the two hole ICs is failed.

Also, if output voltage from one hole IC is out of a predetermined tolerance range, it is determined that this hole IC is failed. If output voltage from the other hole IC is out of a predetermined tolerance range, it is determined that this hole IC is failed. Further, if one hole IC is failed, driving control of a throttle valve is performed with output voltage of the other hole IC, being normal (i.e. not failed). (see e.g. JP-A-2001-174212 & EP 1111 343)

In the non-contact type position sensor used in the transmission, which is disclosed in the aforementioned USP5,846,160, there is a possibility that even when the movable-side terminal rotates by a rotation of the manual shaft, a voltage corresponding to a rotational angle of the movable-side terminal may be stuck and the voltage does not change (i.e. stuck failure). In this way, if the stuck failure is generated, it is considered that the ECU can not determine the set range correctly and an accurate shift control of the transmission becomes difficult. However, in a transmission using the conventional non-contact type position sensor, the consideration of failure, for example the stuck failure of the position sensor, is not proposed.

Further, in the control of an automatic transmission, when a present position (i.e. range) is shifted to another position, some control needs to be performed. It is required that the failure, for example the stuck failure of the position sensor, should be detected while a present position is shifted to another position. However, the non-contact type position sensor, disclosed in the aforementioned Japanese laid open patent, is a throttle opening sensor of an engine. Therefore, the above described requirement in the control of an automatic transmission.

One object of the invention is to provide a failure detection device for a rotation angle detection sensor, which can assure a detection of failure, for example, stuck failure of a detection element for detecting a rotation angle and also assure accurate control for detecting the failure.

Another object of the invention is to provide a failure detection device for a rotation angle detection sensor, which can simplify the logic for detecting the failure and assure accurate control for detecting the failure.

A failure detection device for detecting a failure of a rotation angle detection sensor, which detects a rotation angle of a rotation member, the failure detection device comprising: a first detection element, which has input-output characteristics that output increases as the rotation angle of the rotation member increases; a second detection element, which has input-output characteristics that output decreases as the rotation angle of the rotation member increases; detecting means for detecting the failure of either the first detection element or the second detection element, wherein the detecting means compares an calculation value calculated from both the output of the first detection element and the output of the second detection element with a predetermined value set in advance, and determines the failure of either the first detection element or the second detection element.

A failure detection device for detecting a failure of a rotation angle detection sensor, which detects a rotation angle of a rotation member, the failure detection device comprising: a first detection element; a second detection element; detecting means for detecting the failure of either the first detection element or the second detection element, wherein the detecting means determines that one detection element of the first detection element and the second detection element is failed if output of the one detection element does not change while output of the other detection element is changing.

Embodiments of the present invention will now be described with reference to the drawings, wherein:

Fig. 1(a)(b) shows a diagram of a failure detection device for a rotation angle detection sensor, applied to an automatic transmission, according to the embodiment of the invention

Fig. 2 shows a diagram to explain a failure detection of a position sensor using two hole ICs, being detection elements, of the failure detection device for a rotation angle detection sensor, shown in the Fig. 1.;

Fig. 3 shows a block diagram of the failure detection device for a rotation angle detection sensor, shown in the Fig. 1.;

Fig. 4 shows a flow chart of a failure detection of a position sensor;

Fig. 5 shows a diagram, according to the other embodiment of the invention, to explain a failure detection of a position sensor using two hole ICs, being detection elements, of the failure detection device for a rotation angle detection sensor, shown in the Fig. 1.

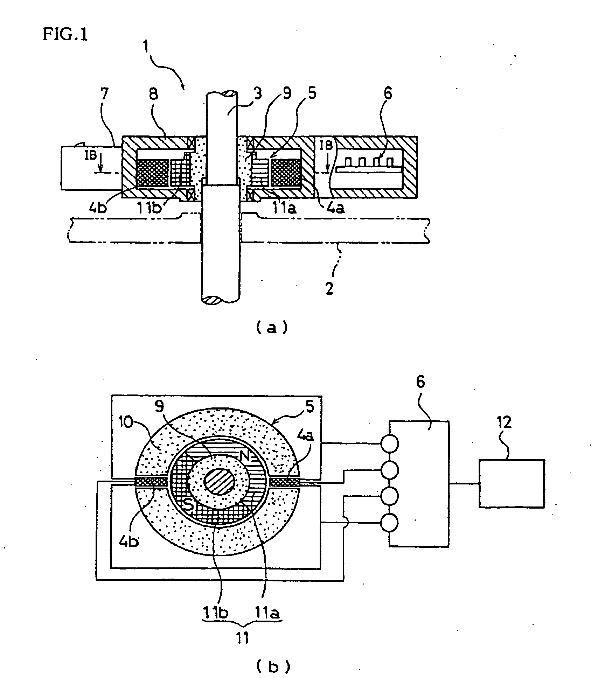

Fig. 1 shows a diagram of a failure detection device for a rotation angle detection sensor, applied to an automatic transmission, according to the embodiment of the invention. Fig. 1(a) shows a partial sectional drawing and Fig. 1(b) shows a sectional drawing along with the line IB-IB.

As shown in Fig. 1(a) and Fig. 1(b), in this embodiment, a failure detection device for a rotation angle detection sensor is applied as a position sensor failure detection device 1 for an A/T (automatic transmission). The position sensor failure detection device 1 is attached to a manual shaft 3 outside of an A/T case 2. The position sensor failure detection device 1 comprises a position sensor 5 including a first IC 4a and a second IC 4b, which is made of hole ICs, as detection elements, an electronic control unit 6 (ECU, corresponding to a control unit in the embodiment of the invention) for controlling A/T, solenoids of A/T controlled by the ECU 6, a connecter 7 including plural terminals for connecting to plural controlled devices (i.e. an engine, an indicator), and a ECU case 8.

The position sensor 5 further comprises an annular internal core 9, made of soft magnetic material and fixed to the manual shaft 3, and an annular external core 10, made of soft magnetic material and fixed, concentrically to the internal core 9, to the ECU case 8. In an outer circumference of the internal core 9, an annular magnet 11 is fixed and the internal core 9 and the magnet 11 are rotating together with the manual shaft 3. The external core 10 includes a pair of cores 10a, 10b, each of which is semicircle-shaped, and these cores 10a, 10b are arranged so that both ends of each of the cores 10a, 10b faces each other with a predetermined space. In this predetermined space, the aforementioned first and second ICs 4a, 4b are respectively disposed.

In that case, a N-pole portion 11 a of the magnet 11 is set to face the first IC 4a and a S-pole portion 11b is set to face the second IC 4b. Thus, the N-pole portion 11a of the magnet 11 and the first IC 4a forms a first position sensor in the embodiment of the invention and the S-pole portion 11b of the magnet 11 and the second IC 4b forms a second position sensor in the embodiment of the invention.

The first and the second ICs 4a, 4b of the position sensor 5 and the ECU 6 are disposed inside of the ECU case 8 and electrically connected each other, thereby the ECU 6 is formed as integrated ECU with the position sensor 5. Alternatively, the position sensor 5 and the ECU 6 can be separated each other, not integrated in the ECU case 8, and be electrically connected each other. The connector 7 is attached to the ECU case 8 and electrically connected to the ECU 6. The ECU 6 for an A/T is connected to the ECU 6 for an engine.

Although not shown in the drawing, the manual shaft 3 is connected to a shift lever through, for example, a lever, a wire outside of the A/T case 2, and connected to a detent and a valve spool of a manual valve inside of the A/T case 2.

The position sensor 5 is made as a non-contact type position sensor, wherein a magnet 11 does not contact with either the first IC 4a or the second IC 4b. The first IC 4a and the second IC 4b continuously output the first sensor voltage value and the second sensor voltage value as shift position detection signals, on the basis of rotation amount (a rotation angle, i.e. operation amount of a shift-operation lever) of N-pole portion 11 a and S-pole portion 11b of the magnet 11, each of which corresponding to the first IC 4a and the second IC 4b.

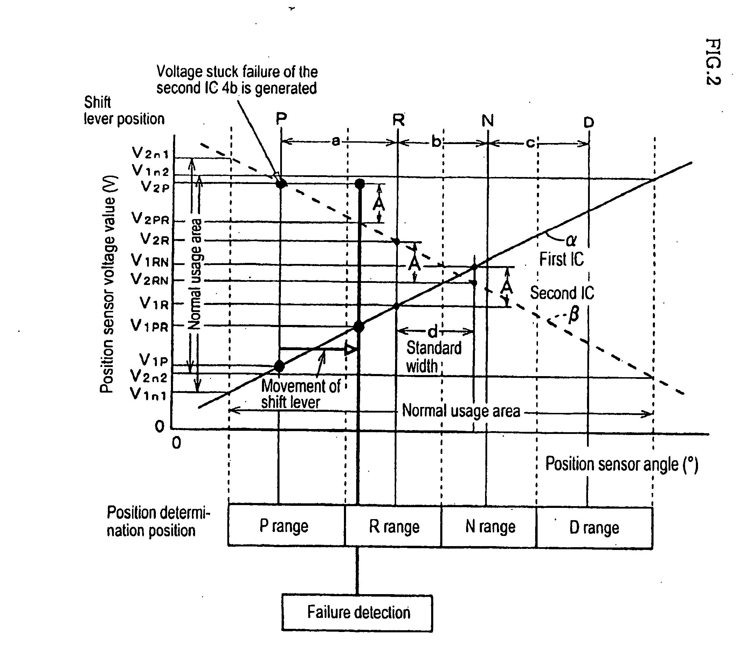

In that case, as shown by a solid line α in Fig. 2, the first IC 4a has linear input-output characteristics. That is, the first sensor voltage (V), output according to the increase of the input-side position sensor angle (i.e. a rotation angle of the N-pole portion 4a), continuously increases linearly. Also, the first sensor voltage, output according to the decrease of the input-side position sensor angle, continuously decreases linearly. On the other hand, as shown by a dotted line β in Fig. 2, the second IC4b has opposite characteristics of the first IC 4a. That is, the second sensor voltage (V), output according to the increase of the input-side position sensor angle (i.e. a rotation angle of the S-pole portion 4b), continuously decreases linearly. Also, the second sensor voltage, output according to the decrease of the input-side position sensor angle, continuously increases linearly. In this example, the absolute values of inclination of the linear input-output characteristics of the first IC 4a and the second IC 4b are set equal. Alternatively, as long as the first IC 4a and the second IC 4b have the linear input-output characteristics with opposite inclination, the absolute values of the inclination can be set differently. In the following explanation of the embodiment, the absolute values of the inclination are set equal as shown in Fig. 2.

In the automatic transmission, applied with the position sensor failure detection device 1 of this embodiment, four ranges, such as a parking range (P range), a reverse range (R range), a neutral range (N range), a drive range (D range), are set. Not limited to these ranges, other ranges, such as a fourth-speed range, a third-speed range, a second-speed range, can be also set. In the following explanation of the embodiment, the A/T has the abovementioned four ranges.

Corresponding to each range P, R, N, and D, each position sensor angle, i.e. a voltage value (V) is set. As shown by vertical dotted lines in Fig. 2, each position sensor angle area for each shift area of each range is set. Also, as shown by vertical solid lines in Fig.2, each position sensor angle for each range, set in A/T, is set and each position sensor voltage value, corresponding to the each position sensor angle of these ranges, is set. For example, the position sensor voltage value for the P range is set V_{1P} (V) for the first IC 4a, V_{2P} (V) for the second IC 4b. Also, the position sensor voltage value for the R range is set V_{1R} (V) for the first IC 4a, V_{2R} (V) for the second IC 4b. Further, the position sensor voltage values for the N range and D range are set on the basis of the lines a, β in the same way. By detecting these position sensor angles for each range, each corresponding range is determined.

A normal usage area of the first and second ICs 4a, 4b is respectively set in a position sensor angle from the shift start of the P range to the shift completion of the D range. When this is shown by the position sensor voltage value, the normal usage area of the first IC 4a is between V₁ₙ₁ (V) and V₁ₙ₂ (V) and the normal usage area of the second IC 4b is between V₂ₙ₁ (V) and V₂ₙ₂ (V).

Further, in this embodiment, a position sensor angle between adjacent ranges (i.e. a range interval) is set a between the P range and the R range, set b between the R range and the N range, and set c between the N range and the D range. In this embodiment, the size of each range interval is set as b < c < a. However, the size of each range interval is not limited to the above relation, but can be set optionally.

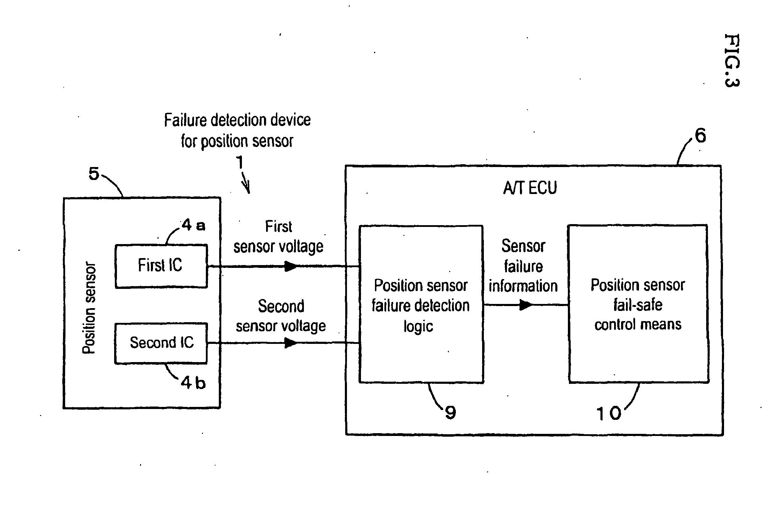

As shown in Fig. 3, the ECU 6 includes position sensor failure detection logic 9 and position sensor fail-safe control unit 10. The position sensor failure detection logic 9 detects stuck failure of the position sensor. In this stuck failure detection logic, stuck failure of either the first IC 4a or the second IC 4b is determined and detected on the basis of total value of the sensor voltage values, output from the first IC 4a and the second IC 4b. Specifically, if absolute value of difference between the total value of the sensor voltage values, output from the first IC 4a and the second IC 4b when the stuck failure is generated on either the first IC 4a or the second IC 4b, and the total value of the sensor voltage values, output from the first IC 4a and the second IC 4b at a normal state, becomes larger than predetermined value, the stuck failure of either the first IC 4a or the second IC 4b is detected and the position sensor, which generate the stuck failure, is detected. Further, when a shift is performed from one range to another adjacent range, the ECU 6 detects the stuck failure before the adjacent range is determined and outputs the sensor failure information to the position sensor fail-safe control unit 10.

In that case, the predetermined value for the determination of the stuck failure is set as follows. At first, a standard width of the position sensor angle to detect the stuck failure detection is set on the basis of the smallest (i.e. narrowest) range interval. In this embodiment, as the smallest range interval is between the R range and the N range as mentioned before, a standard width d, smaller than the range interval width b, is set as shown in Fig. 2. In this way, by setting the standard width d to detect the stuck failure, the stuck failure for each range interval can be detected before the adjacent range is determined when it is shifted from one range.

Then, a sensor voltage value corresponding to the standard width d set to detect the stuck failure is determined. In the first IC 4a, the sensor voltage value is obtained by V_{1RN}-V_{1R}=A, and this A is set as a first predetermined value to determine the stuck failure of the first IC 4a. Also, in the second IC 4b, the sensor voltage value is obtained by V_{2R}-V_{2RN}=A, and this A is set as a second predetermined value to determine the stuck failure
of the second IC 4b. In this embodiment, as the absolute values of inclination in the input-output characteristics of the first IC 4a and the second IC 4b are set equal, the first and second predetermined values are equal to A in either direction of increase of the position sensor angle and decrease of the position sensor angle. (Hereafter, this A is referred as predetermined value A) On the other hand, when the absolute values of inclination in the input-output characteristics of the first IC 4a and the second IC 4b are set differently, the first predetermined value and the second predetermined value is set differently as described later.

A stuck failure detection of the position sensor by the position sensor failure detection logic 9, using the predetermined value A set as described above, is now explained. In Fig. 2, suppose that a shift lever is set in the P range. In this situation, the sensor voltage value of the first IC 4a and the second IC 4b is, respectively, V_{1P} and V_{2P}. The total value is V_{1P} + V_{2P}. To set the range other than the P range, when the shift lever is operated toward the R range, the manual shaft 3 is rotated. Thus, the rotation portions 11a, 11b are rotated together with the manual shaft 3.

With the rotation of these sensors, the sensor voltage output from the first IC 4a increases linearly along with the solid line α in Fig. 2 and the sensor voltage output from the second IC 4b decreases linearly along with the dotted line β in Fig. 2. If neither the first IC 4a nor the second IC 4b generates the voltage stuck failure and in a normal state, while a shift is performed from the P range to the R range, the total value of the sensor voltage values of the first IC 4a and the second IC 4b is V_{1PR} + V_{2PR}. As the inclination of the input-output characteristic of the first IC 4a and the second IC 4b is opposite each other and the absolute value is same, the sensor voltage of the second IC 4b decreases by the same amount as the increased voltage value of the sensor voltage of the first IC 4a. Therefore, the total value of the sensor voltage values of the first IC 4a and the second IC 4b do not change and an equation, V_{1P} + V_{2P}=V_{1PR} + V_{2PR}, is formed.

Then, when the shift lever is set at the R range and remains at the position, the sensor voltage value of the first IC 4a becomes V_{1R}, and the sensor voltage value of the second IC 4b becomes V_{2R}, and the total value of the both sensor voltage value becomes V_{1R} + V_{2R}. Because the total value of the sensor voltages does not change, the ECU 6 determined V_{1P} + V_{2P}=V_{1PR} + V_{2PR}=V_{1R} + V_{2R} and does not detect the stuck failure of the first IC 4a and the second IC 4b. Thus, the ECU 6 determines the R range and performs control for the R range as in the conventional A/T.

Also, when a shift operation is performed from the R range to the N range, or from the N range to the D range, as long as the first IC 4a and the second IC 4b are in a normal state, the sensor voltage of the first IC 4a increases linearly, and the sensor voltage of the second IC 4b decreases by the same amount as the increased voltage value of the sensor voltage of the first IC 4a. However, the total value of the sensor voltage values of the first IC 4a and the second IC 4b do not change. On the other hand, from the D range to the N range, or from the N range to the R range, or from the R range to the P range, that is, when a shift operation is performed in such a direction that the position sensor angle decreases, the total value of the sensor voltage values of the first IC 4a and the second IC 4b do not change although the increase and decrease of the sensor voltage of the first IC 4a and the second IC 4b becomes opposite of the aforementioned situation in which a shift operation is performed in such a direction that the position sensor angle increases. Then, the ECU 6 determines the other ranges in the same way, and performs control for the determined range as in the conventional A/T.

As shown in Fig. 2, for example, when a shift lever is moved from the P range toward the R range, i.e., a direction that a position sensor angle increases, the rotation portions 11a, 11b of the first IC 4a and the second IC 4b rotate in the same way as described above. If the stuck failure is generated in the second IC 4b at a position of the P range, the sensor voltage value of the first IC 4a increases along with the solid line α as described above. However, the sensor voltage value of the second IC 4b does not change (i.e. does not decrease), and remains V_{2P}. Therefore, compared with a situation that the second IC 4b is in a normal state, the total value V_{1PR} + V_{2P} of the sensor voltage values of the first IC 4a and the second IC 4b, increases by the amount {(V_{1PR} + V_{2P}) - (V_{1PR} + V_{2PR} = V_{2P} - V_{2PR}} that the sensor voltage value of the second IC 4b does not decrease compared with a normal situation of the both ICs 4a, 4b. As shown in Fig. 2, this increased amount, i.e., a difference between the total sensor voltage value of the first and the second ICs 4a, 4b when the second IC 4b generates the stuck failure, and the total sensor voltage value of the first and the second ICs 4a, 4b when the both ICs 4a, 4b are in a normal state, becomes positive. Therefore, the position sensor failure detection logic 9 compares the absolute value of this difference with the predetermined value A corresponding to the second IC 4b. If the absolute value of this difference becomes larger than the predetermined value A, the position sensor failure detection logic 9 determines that the stuck failure is generated in the second IC 4b. Thus, the position sensor failure detection logic 9 detects the stuck failure of the second IC 4b, and output sensor failure information to the position sensor fail-safe control unit 10.

As described above, it is before the R range is determined by the ECU 6 when the position sensor failure detection logic 9 detects the stuck failure of the second IC 4b. In this way, the stuck failure can be detected before the R range is determined. This is because the predetermined value A, which is determined by the standard width d set based on the aforementioned smallest range interval (i.e. a range interval between the R range and the N range), is used.

Also, in the same way, the stuck failure of the second IC 4b, at a time of shift operation in a direction that the position sensor angle increases at another range other than the P range, can be detected before the adjacent range is determined. Further, in the same way, the stuck failure of the first IC 4a, at a time of shift operation in a direction that the position sensor angle increases, can also be detected before the adjacent range is determined. However, in this case, the difference of the total sensor voltage value of the both position sensors 4 and the total sensor voltage value of the both position sensors 4 in a normal state becomes negative. Therefore, as the predetermined value to detect the stuck failure in this case, the predetermined value A corresponding to the first IC 4a.

Further, also in each stuck failure of the first or second ICs 4a, 4b in a direction that the position sensor angle decreases, the stuck failure is detected before the adjacent range is determined. In this case, the increase and decrease of the voltage value of the both ICs 4a, 4b becomes opposite direction of the direction that the position sensor angle increases. However, in this embodiment, the absolute value of the difference as mentioned above, and the predetermined value are compared. Therefore, a predetermined value corresponding to each of the first and the second ICs 4a, 4b, like the case that position sensor angle increases, is used as the predetermined value to detect the stuck failure of the first or the second ICs 4a, 4b.

When the aforementioned sensor failure information is input from the position sensor failure detection logic 9, the position sensor fail-safe control unit 10 performs a fail-safe control so as not to perform control of the next range for the A/T. In this situation, as the sensor failure information is input before the next range is determined, the fail-safe control is initiated before the next range is determined. Therefore, even though the next range is determined accidentally, the control of the next range for the A/T can be prevented for sure.

In the mean time, in a control system of transmission such as an A/T, a sensor voltage value changes on the basis of circumstance, such as temperature. Therefore, to reduce the effect to the circumstance, a control system that limits a sensor voltage value by software to detect a stuck failure and that is improved only in an area where the sensor accuracy is need, is adopted. For such control system of the transmission, the aforementioned position sensor stuck failure detection device 1 can be applied. In this case, the aforementioned standard width d, as a predetermined value to detect a stuck failure, is set smaller, and a predetermined value B, which is decided to be smaller than the aforementioned predetermined value A, is used. Of course, the predetermined value B is the predetermined value, which is set corresponding to each of the first and second ICs 4a, 4b.

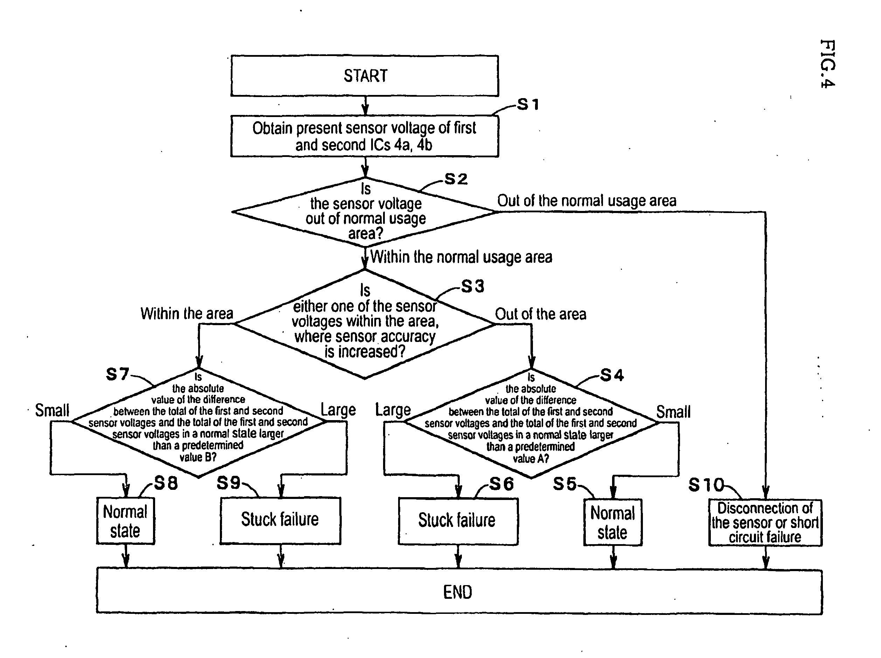

Fig. 4 shows a flow chart of the aforementioned stuck failure detection of the position sensor. As shown in Fig. 4, when the stuck failure detection of the position sensor starts, at step S1, present sensor voltage values of the first and second ICs 4a, 4b, are obtained. Next, at step S2, it is determined if each sensor voltage value of the both ICs 4a, 4b is within a normal usage area (i.e., V₁ₙ₁~V₁ₙ₂ for the first IC 4a, V₂ₙ₂~V₂ₙ₁ for the second IC 4b). If it is determined that each sensor voltage value is within the normal usage are, it is determined, at step S3, if one of the sensor voltage values is within an area, in which a sensor accuracy is increased. If it is determined that both sensor voltage values are out of the area, in which a sensor accuracy is increased, it is determined, at step S4, if the absolute value of the difference between the total sensor voltage value of the first and second ICs 4a, 4b, and the total sensor voltage value of the first and second ICs 4a, 4b in their normal state, is larger than the predetermined value A. If is determined that the absolute value of the difference is smaller than the predetermined value A, it is determined, at step S5, that the both ICs 4a, 4b, are normal, and the stuck failure detection of the position sensor ends.

If it is determined, at step S4, that the aforementioned difference is larger than the predetermined value A, a stuck failure or an oscillation failure of the position sensor is detected, at step S6, on the basis of the positive or negative of the aforementioned difference and the direction of the increase or decrease of the position sensor angle. Also, the position sensor, which generates the stuck failure, is detected, and the stuck failure detection of the position sensor ends.

Also, if it is determined, at step S3, that one of the both sensor voltage values are within the area, in which a sensor accuracy is increased, it is determined, at step S7, if the absolute value of the difference between the total sensor voltage value of the first and second ICs 4a, 4b, and the total sensor voltage value of the first and second ICs 4a, 4b in their normal state, is larger than the predetermined value B. If is determined that the absolute value of the difference is smaller than the predetermined value B, it is determined, at step S8, that the both ICs 4a, 4b, are normal, and the stuck failure detection of the position sensor ends.

If it is determined, at step S7, that the aforementioned difference is larger than the predetermined value B, a stuck failure or an oscillation failure of the position sensor is detected, at step S9, on the basis of the positive or negative of the aforementioned difference and the direction of the increase or decrease of the position sensor angle. Also, the position sensor, which generates the stuck failure, is detected, and the stuck failure detection of the position sensor ends. Further, if it is determined, at step S2, that each sensor voltage value is out of the normal usage area, it is determined, as step S 10, that the position sensor failure is a failure other than the stuck failure, such as disconnection of the sensor or short circuit, and the stuck failure detection of the position sensor ends.

According to the position sensor stuck failure detection device of the embodiment, the absolute value of the difference between the total sensor voltage of the first and second ICs 4a, 4b, which has the characteristics that the inclination becomes opposite each other, and the total sensor voltage of the first and second ICs 4a, 4b in a normal state, is compared to the predetermined value A or B. Therefore, as the total sensor voltage of the first and second position sensor can be made different by the position sensor, which generates the stuck failure, the aforementioned difference can also be made different. Thus, the stuck failure of the first and second ICs 4a, 4b can be detected for sure before the next range is determined.

Also, according to the position sensor stuck failure detection device of the embodiment, the input-output characteristics of the first and second ICs 4a, 4b has characteristics that the linear inclination is opposite and the absolute value of the inclination is equal to each other. Therefore, the predetermined value for the first and second ICs 4a, 4b can be set equal to each other. Thus, the control of the stuck failure detection can be performed more easily and more accurately.

Further, the predetermined values A, B are set on the basis of the smallest range interval (i.e. between R and N ranges) of position sensor angle (i.e. range interval) between each of the adjacent ranges. Therefore, in any range, when the stuck failure of the position sensor is generated, the stuck failure of the position sensor can be detected for sure before the next adjacent range is determined. Thus, at any range, when the stuck failure is detected before the next range is determined, some action for the stuck failure of the position sensor, such as fail-safe control not to perform shift control for the A/T, can be taken. In addition, wrong determination of the range of the A/T by the ECU 6 can also be prevented.

Although, in the aforementioned embodiment, the output of the first and second ICs 4a, 4b are set with opposite inclination each other and same absolute value of the inclination, the output can also be set with opposite inclination each other and different absolute value of the inclination. In this case, the predetermined value, set with the consideration of the accuracy of the first and second ICs 4a, 4b, is used. For example, corresponding to the first IC 4a, first predetermined values A₁ and B₁ are set, and corresponding to the second IC 4b, second predetermined values A₂ and B₂ are set. To decide which predetermined value is selected, it is based on the direction of the increase or decrease of the position sensor angle, or the positive or negative of the aforementioned difference.

Also, the predetermined value can also be selected based on rate of change of the total sensor voltage value of the first and second ICs 4a, 4b. Further, the stuck failure can also be detected by comparing the difference (i.e. subtracted value) of the first sensor voltage value of the first IC 4a and the second sensor voltage value of the second IC 4b, and the predetermined value. That is, the stuck failure can also be detected by comparing the calculated value (such as, total value (i.e. additional value), subtracted value, multiplied value, divided value, etc.) of the first sensor voltage value of the first IC 4a and the second sensor voltage value of the second IC 4b, and the predetermined value, corresponding to these calculated value.

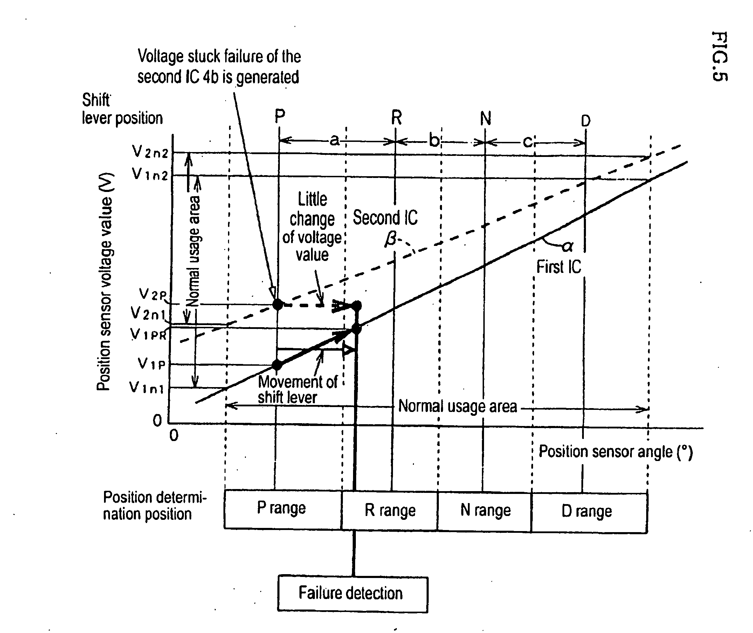

Fig. 5 shows another embodiment of the invention like Fig. 2. The same elements as in the previous embodiment are denoted with the corresponding note. The detailed explanation is omitted for convenience of explanation. In the aforementioned embodiment, the inclination of the input-output characteristics of the first and second ICs 4a, 4b is in a opposite direction and the stuck failure is detected by comparing the calculated value (such as, total value (i.e. additional value), subtracted value, multiplied value, divided value, etc.) of the first sensor voltage value of the first IC 4a and the second sensor voltage value of the second IC 4b, and the predetermined value, corresponding to these calculated value. On the other hand, in the following embodiment, the stuck failure detection device 1 for the position sensor detects that while one sensor voltage value, output from one IC of the first and second ICs 4a, 4b, is changing in spite of the direction of the inclination of the input-output characteristics of the first and second ICs 4a, 4b, the other sensor voltage value, output from the other IC, is hardly changing. Thus, it can be detected that the other IC generates the stuck failure.

That is, for example, the stuck failure detection device 1 for the position sensor, shown in Fig. 5, includes the first and second ICs 4a, 4b, in which the inclinations of the input-output characteristics are in a same direction and the absolute values of the inclinations are different. If the shift lever is moved toward the R range position while the second IC 4b is generating the stuck failure in the P range position, the first sensor voltage value, output from the first IC 4a, increases as the rotation angle of the position sensor increases, shown as thick solid arrow in Fig. 5. On the other hand, the second sensor voltage value, output from the second IC 4b generating the stuck failure, hardly changes as the rotation angle of the position sensor increases, shown as thick dotted arrow in Fig. 5. Thus, based on that although the first sensor voltage value increases, the second sensor voltage value hardly changes, the generation of the stuck failure of the second IC 4b is detected by the A/T ECU 6.

As described above, according to the stuck failure detection device 1 for the position sensor in this embodiment, without comparing the first and second voltage values, output from the first and second ICs 4a, 4b, with the predetermined values, simply by detecting that although one sensor voltage value of the first and second ICs 4a, 4b is changing, the other sensor voltage value hardly changes, the stuck failure of the hole ICs can be detected easily and for sure. Therefore, because the logic to compare and calculate the sensor voltage value and the predetermined value becomes unnecessary, the logic to detect the stuck failure can be made simple and the control to detect the stuck failure can be performed more accurately. Other structures and advantages of the stuck failure detection device for the position sensor in this embodiment are same as the previous embodiment.

Also, in the example shown in Fig. 5, the inclinations of the input-output characteristics of the first and second ICs 4a, 4b are in a same direction and the absolute values of the inclinations are different. However, the invention is not limited to this example. For example, the first and second ICs 4a, 4b, in which the inclinations of the characteristics are in a same direction and the absolute values of the inclinations are same, can be used. Alternatively, the first and second ICs 4a, 4b, in which the inclinations of the characteristics are in an opposite direction and the absolute values of the inclinations are same or different, can also be used.

Also, although, in each embodiment as described above, an automatic transmission is used for explanation of the embodiment of the invention as a transmission, the invention is not limited to the embodiment. For example, as long as controlled by the ECU using the sensor voltage from the position sensor, the invention can be applied to other type of the transmission, such as, continuously variable transmission (CVT). In addition, the setting of each range is also not limited to the aforementioned embodiment, and can be set optionally.

Further, the invention is not limited to a transmission, but can be applied to any type of rotation member. Also, the invention can be applied to the detection of other failure other than the aforementioned stuck failure, as long as the output of the detection element of the rotation angle detection sensor changes from the normal state by the failure.

One possible advantage of some embodiments of the invention includes, the failure of the rotation angle detection sensor can be detected while the sensor is stopping (i.e. while the user is not moving the shift lever).

Another possible advantage is as follows. The calculated value of both outputs from the first and second detection elements is compared with the predetermined value, set in advance. Also, the input-output characteristics of the first and second detection elements are characteristics that the inclinations are opposite. Therefore, because, depending on the detection element generating the failure, the calculated value of the outputs from the first and second detection elements becomes different, the calculated value becomes different for the predetermined value, depending on the detection element generating the failure. Thus, the failure, such as stuck failure, of the first and second detection element can be detected for sure, and in addition, the detection element generating the failure can be detected easily and for sure. Therefore, the control to detect the failure can be performed more accurately. Also, the failure, such as stuck failure, can be detected while the present position (range) is moved to the next position.

Another possible advantage is as follows. The absolute value of the difference, between the total of the outputs from the first and second detection sensors and the total of the outputs from the first and second detection sensors in a normal state, is compared with the predetermined value, set in advance. Also, the input-output characteristics of the first and second detection elements are characteristics that the inclinations are opposite. Therefore, because, depending on the detection element generating the failure, the total value of the outputs from the first and second detection elements becomes different, the difference as mentioned before becomes different for the predetermined value, depending on the detection element generating the failure. Thus, the failure, such as stuck failure, of the first and second detection element can be detected for sure, and in addition, the detection element generating the failure can be detected easily and for sure. Therefore, the control to detect the failure can be performed more accurately.

Another possible advantage is as follows. When the output of one of the first and second detection sensors changes, however, the output of the other does not change, it is determined that the other detection element is in a failed state. Thus, the failure, such as stuck failure, of the first and second detection element can be detected for sure, and in addition, the detection element generating the failure can be detected easily and for sure. Therefore, because the logic to calculate and compare the output of the detection element with the predetermined value becomes unnecessary, the logic to detect the failure can be made simple, and the control to detect the failure can be performed more accurately.

Another possible advantage is as follows. The input-output characteristics of the first and second detection elements have the characteristics that the inclination is opposite and the absolute value of the inclination becomes equal to each other. Thus, the first and second predetermined value can be set equal to each other, and the control to detect the failure can be performed more simply and accurately.

Another possible advantage is as follows. The failure, such as stuck failure of the position sensor, which detects the position of the shift operation member setting the range of the transmission, can be detected. Therefore, wrong determination of the range of the transmission by the ECU can also be prevented.

Another possible advantage is as follows. In the transmission, wherein multiple ranges are set, the predetermined value are set on the basis of the position sensor angle (range interval) between ranges, which is adjacent each other. Therefore, in a case when two ranges are set, the failure, such as stuck failure of the position sensor, can be detected before the next adjacent range is determined. Thus, if the failure is detected before the next range is determined, some action for the failure, such as stuck failure, of the position sensor can be taken. (i.e. fail-safe control not to perform shift control for the transmission)

Another possible advantage is as follows. The predetermined value is set on the basis of the smallest range interval among the position sensor angles (range interval), which are adjacent each other. Thus, at any range, when the failure, such as stuck failure of the position sensor is generated, the failure can be detected before the next adjacent range is determined. Thus, at any range, when the failure is detected before the next range is determined, some action for the stuck failure of the position sensor, such as fail-safe control not to perform shift control for the transmission, can be taken.

## Claims

1. A failure detection device (1) or detecting a failure of a rotation angle detection sensor (5), which detects a rotation angle of a rotation member, the failure detection device comprising:
a first detection element (4a), which has input-output characteristics that output increases as the rotation angle of the rotation member increases;
a second detection element (4b), which has input-output characteristics that output decreases as the rotation angle of the rotation member increases; and
detecting means (9) for detecting the failure of either the first detection element (4a) or the second detection element (4b), wherein the detecting means (9) compares an calculation value calculated from both the output of the first detection element (4a) and the output of the second detection element (4b) with a predetermined value set in advance, and determines the failure of either the first detection element or the second detection element,
wherein at least the first detection element (4a) and the second element (4b) form the position sensor (5) which detects a position of a shift operation member for setting a range of a transmission **characterized in that** the range of the transmission includes at least three ranges, and the predetermined value is set on the basis of a range interval between adjacent ranges and on the basis of a shortest range interval.

2. The wherein at least the first detection element (4a) and the second detection element (4b) form the position sensor (5) wich detects a position of a shift-operation member for setting a range of a transmission **characterized in that** the range of the transmission includes at least three ranges, and the predetermined value is set on the basis of a range interval between adjacent ranges and on thebasis of a shortest range interval device according to claim 1, wherein the predetermined value includes a first predetermined value set for the first detection element (4a) and a second predetermined value set for the second detection element, and the first predetermined value is set on the basis of output of the first detection element in a normal state and the second predetermined value is set on the basis of output of the second detection element in a normal state.

3. The device according to claim 1 or 2, wherein the detecting means (9) determines that one detection element of the first detection element and the second detection element is failed if output of the one detection element does not change while output of the other detection element is changing.

4. The device according to claim 2 or 3, wherein the first predetermined value and the second predetermined value are set substantially equal.

5. The device according to any one of claims 1 to 4, wherein an absolute value of inclination of the input-output characteristics of the first detection element and the second detection element are set substantially equal.

## Patentansprüche

1. Fehlererkennungseinrichtung (1) zum Erkennen einer Fehlfunktion eines Drehwinkelsensors (5), der einen Drehwinkel eines Rotationsteils erkennt, wobei die Fehlererkennungseinrichtung aufweist:
ein erstes Erfassungselement (4a) mit einer Eingangs-Ausgangs-Charakteristik, wonach der Ausgang mit zunehmendem Drehwinkel des Rotationsteils zunimmt;
ein zweites Erfassungselement (4b) mit einer Eingangs-Ausgangs-Charakteristik, wonach der Ausgang mit zunehmendem Drehwinkel des Rotationsteils abnimmt; und
einer Erkennungseinrichtung (9) zum Erkennen der Fehlfunktion entweder des ersten Erfassungselements (4a) oder des zweiten Erfassungselements (4b), wobei die Erkennungseinrichtung (9) einen Berechnungswert, der aus dem Ausgang des ersten Erfassungselements (4a) und dem Ausgang des zweiten Erfassungselements (4b) berechnet wurde, mit einem vorbestimmten vorab festgelegten Wert vergleicht, und die Fehlfunktion des ersten Erfassungselements oder des zweiten Erfassungselements ermittelt;
wobei mindestens das erste Erfassungselement (4a) und das zweite Erfassungselement (4b) den Drehwinkelsensor (5) bilden, der eine Position eines Schaltelements zum Einstellen einer Fahrstufe eines Getriebes erfasst,
**dadurch gekennzeichnet, dass** die Fahrstufen des Getriebes mindestens drei Fahrstufen aufweisen und der vorbestimmte Wert auf der Basis eines Fahrstufenintervalls zwischen benachbarten Fahrstufen und auf der Basis eines kürzesten Fahrstufenintervalls gesetzt wird.

2. Einrichtung nach Anspruch 1, wobei der vorbestimmte Wert einen ersten vorbestimmten Wert, der für das erste Erfassungselement (4a) gesetzt wird, und einen zweiten vorbestimmten Wert, der für das zweite Erfassungselement gesetzt wird, aufweist, und der erste vorbestimmte Wert basierend auf dem Ausgang des ersten Erfassungselements im Normalzustand gesetzt wird und der zweite vorbestimmte Wert basierend auf dem Ausgang des zweiten Erfassungselements im Normalzustand gesetzt wird.

3. Einrichtung nach Anspruch 1 oder 2, wobei die Erkennungseinrichtung (9) ermittelt, dass das erste Erfassungselement oder das zweite Erfassungselement versagt, wenn sich der Ausgang des einen Erfassungselements nicht ändert, während sich der Ausgang des anderen Erfassungselements ändert.

4. Einrichtung nach Anspruch 2 oder 3, wobei der erste vorbestimmte Wert und der zweite vorbestimmte Wert im Wesentlichen gleich gesetzt sind.

5. Einrichtung nach einem der Ansprüche 1 bis 4, wobei die Absolutwerte der Neigungen der Eingangs-Ausgangs-Charakteristika des ersten Erfassungselements und des zweiten Erfassungselements im Wesentlichen gleich sind.

## Revendications

1. Dispositif de détection de défaillance (1) destiné à détecter une défaillance d'un capteur de détection d'angle de rotation (5), qui détecte un angle de rotation d'un élément de rotation, le dispositif de détection de défaillance comprenant :
un premier élément de détection (4a), qui présente des caractéristiques entrée-sortie selon lesquelles la sortie augmente lorsque l'angle de rotation de l'élément de rotation augmente ;
un second élément de détection (4b), qui présente des caractéristiques entrée-sortie selon lesquelles la sortie diminue lorsque l'angle de rotation de l'élément de rotation augmente ; et
un moyen de détection (9) destiné à détecter la défaillance du premier élément de détection (4a) ou du second élément de détection (4b), le moyen de détection (9) comparant une valeur de calcul calculée à partir de la sortie du premier élément de détection (4a) ainsi que de la sortie du second élément de détection (4b) avec une valeur prédéfinie déterminée à l'avance, et détermine la défaillance du premier élément de détection ou du second élément de détection,
dans lequel au moins le premier élément de détection (4a) et le second élément de détection (4b) forment le capteur de position (5) qui détecte une position d'un élément à action de décalage destiné à déterminer une plage d'une transmission, **caractérisé en ce que** la plage de la transmission comprend au moins trois plages, et la valeur prédéfinie est déterminée sur la base d'un intervalle de plage entre plages adjacentes et sur la base d'un intervalle de plage le plus court.

2. Dispositif selon la revendication 1, dans lequel la valeur prédéfinie comprend une première valeur prédéfinie déterminée pour le premier élément de détection (4a) et une seconde valeur prédéfinie déterminée pour le second élément de détection, et la première valeur prédéfinie est déterminée sur la base de la sortie du premier élément de détection dans un état normal et la seconde valeur prédéfinie est déterminée sur la base de la sortie du second élément de détection dans un état normal.

3. Dispositif selon la revendication 1 ou 2, dans lequel le moyen de détection (9) détermine qu'un élément de détection parmi le premier élément de détection et le second élément de détection est défaillant si la sortie de cet élément de détection ne change pas alors que la sortie de l'autre élément de détection change.

4. Dispositif selon la revendication 2 ou 3, dans lequel la première valeur prédéfinie et la seconde valeur prédéfinie sont déterminées pour être sensiblement égales.

5. Dispositif selon l'une quelconque des revendications 1 à 4, dans lequel des valeurs absolues d'inclinaison des caractéristiques entrée-sortie du premier élément de détection et du second élément de détection sont déterminées pour être sensiblement égales.
